# EUROPEAN PATENT APPLICATION

(11) **EP 4 752 618 A1**
(43) Date of publication of application: **03.06.2026**
(21) Application number: 24845680.8
(22) Date of filing: 25.07.2024
(51) Int. Cl.: G02B 6/44, G02B 6/02

(54) **OPTICAL FIBER RIBBON AND METHOD FOR MANUFACTURING OPTICAL FIBER RIBBON**

(30) Priority: 25.07.2023 JP 2023120735
(71) Applicant: Sumitomo Electric Industries, Ltd., Osaka-shi, Osaka 541-0041 (JP)
(72) Inventor: SHIOZAKI, Manabu, Osaka-shi, Osaka 541-0041 (JP); KAKII, Toshiaki, Osaka-shi, Osaka 541-0041 (JP); YOSHIKAWA, Satoshi, Osaka-shi, Osaka 541-0041 (JP); KOHDA, Hiroshi, Osaka-shi, Osaka 541-0041 (JP)
(74) Representative: Müller-Boré & Partner Patentanwälte PartG mbB
(86) International application number: PCT/JP2024/026681
(87) International publication number: WO 2025/023306

(57) **Abstract**

An optical fiber ribbon includes a first multicore fiber having a plurality of first cores, a second multicore fiber arranged in parallel with the first multicore fiber, and a coating member. The coating member includes a first coating portion covering the first multicore fiber and a second coating portion covering the second multicore fiber. A first light-irradiated surface having a width larger than the diameter of the first core is provided in at least one region where a virtual line passing through at least two or more of first cores among the plurality of first cores or a virtual line passing through the center of the first multicore fiber intersects with the outer circumference of the first coating portion. The first light-irradiated surface includes a curved surface having a radius of curvature of 0.5 mm or more or a flat surface.

## Description

### Technical Field

The present disclosure relates to an optical fiber ribbon and a method for manufacturing an optical fiber ribbon.

The present application claims the priority based on Japanese Patent Application No. 2023-120735, filed on July 25, 2023, the entire contents of which are incorporated herein by reference.

### Background Art

Patent Literature 1 discloses a ribbon fiber including a plurality of multicore fibers and capable of separating fibers, and a method for manufacturing the same. Patent Literature 2 discloses a multicore fiber alignment method. In the alignment method described in Patent Literature 2, the side of the multicore fiber is irradiated with illumination light, and the displacement of the shadow of the core is detected by the imaging device. As a result, torsion of the multicore fiber is detected, and the torsion is eliminated using the torsion elimination pulley. Patent Literature 3 discloses a ribbon fiber of a type different from the ribbon fiber of Patent Literature 1.

### Citation List

### Patent Literature

Patent Literature 1: Japanese Unexamined Patent Publication No. 2017-173514
Patent Literature 2: Japanese Unexamined Patent Publication No. 2014-133673
Patent Literature 3: WO 2016/047658 A

### Summary of Invention

An optical fiber ribbon according to an embodiment of the present disclosure includes a first multicore fiber including a plurality of first cores and first cladding covering the plurality of first cores, a second multicore fiber that includes a plurality of second cores and second cladding covering the plurality of second cores and is arranged in parallel with the first multicore fiber, and a coating member at least partially covering the first multicore fiber and the second multicore fiber. The coating member includes a first coating portion covering the first multicore fiber and a second coating portion covering the second multicore fiber. A first light-irradiated surface having a width larger than the diameter of the first core is provided in at least one region where a virtual line passing through at least two or more of first cores among the plurality of first cores or a virtual line passing through the center of the first multicore fiber intersects with the outer circumference of the first coating portion. This first light-irradiated surface includes a curved surface having a radius of curvature of 0.5 mm or more or a flat surface.

### Brief Description of Drawings

[FIG. 1] FIG. 1 is a cross-sectional view of an optical fiber ribbon according to an embodiment.
[FIG. 2] FIG. 2 is a diagram illustrating a method for manufacturing the optical fiber ribbon illustrated in FIG. 1.
[FIG. 3] FIG. 3 is a diagram for explaining a method of core alignment by light irradiation in a general multicore fiber.
[FIG. 4] Parts (a), (b), and (c) of FIG. 4 are diagrams illustrating measurement results of symmetry in core alignment illustrated in FIG. 3.
[FIG. 5] FIG. 5 is a diagram illustrating an example of a relationship between asymmetry and a rotation angle.
[FIG. 6] Part (a) of FIG. 6 is an example illustrating a transmission state of light emitted in a case where the coating resin is not unevenly distributed in the ribbon fiber, and part (b) of FIG. 6 is an example illustrating a transmission state of light emitted in a case where the coating resin is unevenly distributed in the ribbon fiber.
[FIG. 7] Part (a) of FIG. 7 is a diagram illustrating a measurement result of symmetry in core alignment illustrated in part (a) of FIG. 6, and part (b) of FIG. 7 is a diagram illustrating a measurement result of symmetry in core alignment illustrated in part (b) of FIG. 6.
[FIG. 8] Parts (a), (b), and (c) of FIG. 8 are examples illustrating a transmission state of light in a case of replacing a general multicore fiber, a multicore fiber whose light-irradiated surface is a curved surface having a large radius of curvature, and a multicore fiber whose light-irradiated surface is a flat surface in a case where the coating resin of the ribbon fiber is unevenly distributed.
[FIG. 9] FIG. 9 is a diagram illustrating a relationship between asymmetry and a radius of curvature of a light-irradiated surface in a multicore fiber in a case where the radius of curvature of the light-irradiated surface is changed.
[FIG. 10] FIG. 10 is a graph illustrating a measurement result of symmetry in a case where a multicore fiber having the structure illustrated in part (c) of FIG. 8 is irradiated with light.
[FIG. 11] Parts (a), (b), and (c) of FIG. 11 are examples illustrating a transmission state of light in a case of replacing a general multicore fiber, a multicore fiber having a light-irradiated surface on one side, and a multicore fiber having light-irradiated surface on both sides in a case where the coating resin of the ribbon fiber is unevenly distributed.
[FIG. 12] FIG. 12 is a diagram illustrating a relationship between asymmetry and a radius of curvature of a light-irradiated surface in a multicore fiber illustrated in parts (a) to (c) of FIG. 11.
[FIG. 13] Parts (a), (b), and (c) of FIG. 13 are diagrams illustrating an example of a positional relationship between an installation position of a light-irradiated surface and each core.
[FIG. 14] Parts (a), (b), and (c) of FIG. 14 are diagrams illustrating another example of the positional relationship between the installation position of a light-irradiated surface and each core.
[FIG. 15] FIG. 15 is a cross-sectional view of a first modification of the optical fiber ribbon.
[FIG. 16] FIG. 16 is a cross-sectional view of a second modification of the optical fiber ribbon.

### Description of Embodiments

### [Problem to be Solved by Present Disclosure]

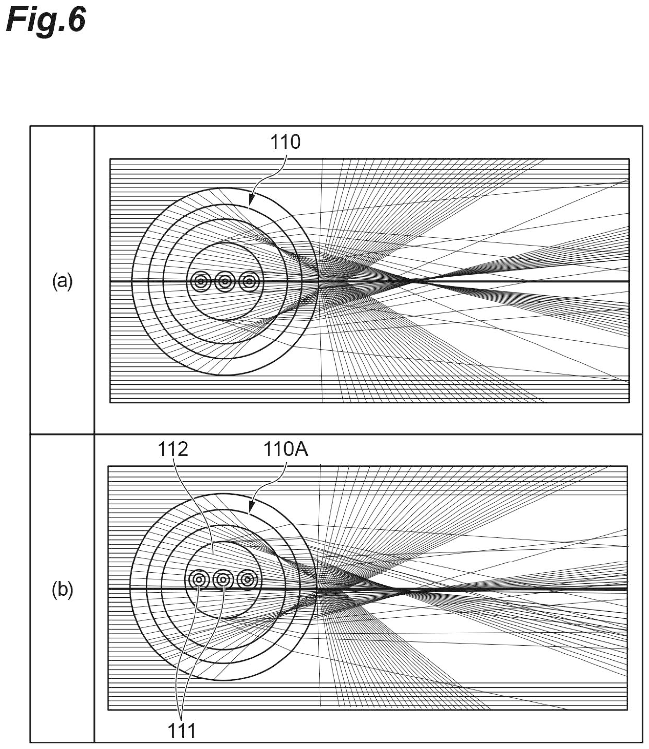

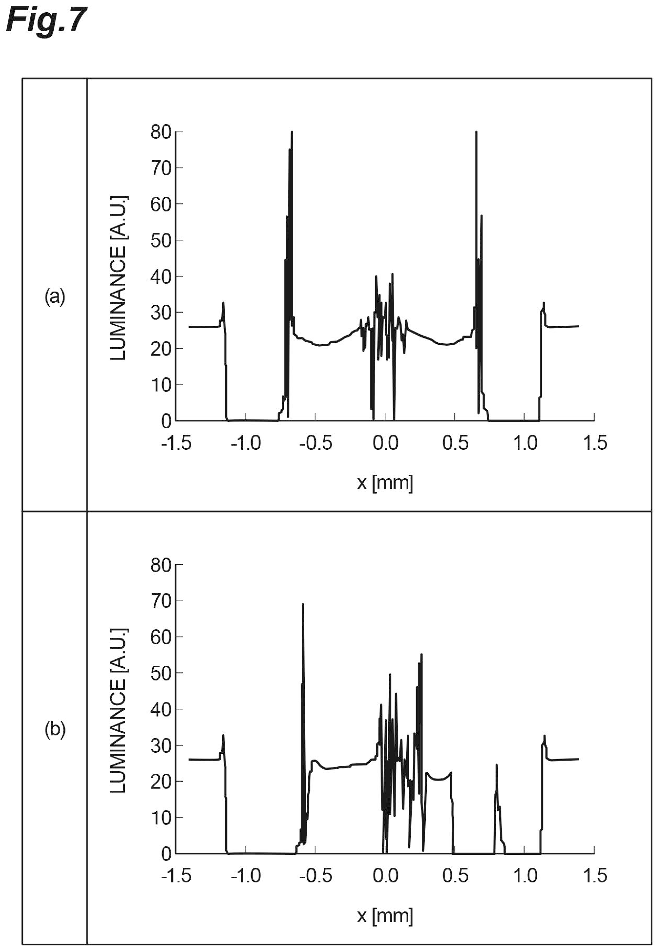

When the separable type ribbon fiber described in Patent Literature 1 is manufactured, various resins covering the cladding may be unevenly distributed in each multicore fiber, that is, a so-called thickness deviation may be formed. Such a resin is, for example, a primary resin layer or a secondary resin layer covering the cladding, or a resin layer collectively covering the fibers. If the resin is unevenly distributed in this way, even if the arrangement of the cores in each fiber is aligned, for example, in a case where core alignment is performed by light irradiation, the alignment is not successful due to the influence of the uneven distribution of the resin in some cases. For example, as illustrated in part (a) of FIG. 6, when a fiber in which the cores are aligned (cores are aligned in one direction) is irradiated with illumination light, if there is no uneven distribution of the resin, the light transmitted through the fiber is represented as a luminance graph having symmetry (see part (a) of FIG. 7). On the other hand, as illustrated in part (b) of FIG. 6, in a case where the resin is unevenly distributed, the light transmitted through the fiber is represented as a luminance graph of a broken symmetry (asymmetry) even if the arrangement of the cores is aligned (see part (b) of FIG. 7). In this case, although the arrangement of the cores is actually aligned, it is detected that the arrangement of the cores is not aligned due to uneven distribution of the resin.

### [Effects of Present Disclosure]

According to the present disclosure, core alignment can be reliably performed in a ribbon fiber including a plurality of multicore fibers.

### [Description of Embodiment of Present Disclosure]

First, the contents of embodiments of the present disclosure are enumerated and described.
[1] An optical fiber ribbon according to an embodiment of the present disclosure includes a first multicore fiber including a plurality of first cores and first cladding covering the plurality of first cores, a second multicore fiber that includes a plurality of second cores and second cladding covering the plurality of second cores and is arranged in parallel with the first multicore fiber, and a coating member at least partially covering the first multicore fiber and the second multicore fiber. The coating member includes a first coating portion covering the first multicore fiber and a second coating portion covering the second multicore fiber. A first light-irradiated surface having a width larger than the diameter of the first core is provided in at least one region where a virtual line passing through at least two or more of first cores among the plurality of first cores or a virtual line passing through the center of the first multicore fiber intersects with the outer circumference of the first coating portion. The first light-irradiated surface includes a curved surface having a radius of curvature of 0.5 mm or more or a flat surface.
   In this optical fiber ribbon, a first light-irradiated surface having a width larger than the diameter of the first core is provided in at least one region where a virtual line passing through at least two or more of first cores among the plurality of first cores or a virtual line passing through the center of the first multicore fiber intersects with the outer circumference of the first coating portion. This first light-irradiated surface includes a curved surface having a radius of curvature of 0.5 mm or more or a flat surface. In this case, according to the simulation results by the present inventors, it has been found that even if there is a certain degree of uneven distribution (thickness deviation) in the resin coating the cladding in the optical fiber ribbon, the transmitted light has symmetry in a case where the arrangement of the first cores is aligned by making the illumination light enter from the light-irradiated surface having the above structure. Therefore, according to this optical fiber ribbon, it is possible to obtain a ribbon fiber in which alignment of the plurality of first cores is reliably performed.
[2] In the optical fiber ribbon according to [1], a second light-irradiated surface having a width larger than the diameter of the second core may be provided in at least one region where a virtual line passing through at least two or more of second cores among the plurality of second cores or a virtual line passing through the center of the second multicore fiber intersects with the outer circumference of the second coating portion. This second light-irradiated surface may include a curved surface having a radius of curvature of 0.5 mm or more or a flat surface. In this case, it is possible to obtain a ribbon fiber in which alignment of the plurality of second cores can be reliably performed in addition to alignment of the plurality of first cores.
[3] In the optical fiber ribbon according to [2], a normal direction of the first light-irradiated surface at an intersection of the first light-irradiated surface and the virtual line may face the same direction as a normal direction of the second light-irradiated surface at an intersection of the second light-irradiated surface and the virtual line. In this case, illumination light for alignment work of the cores in the first multicore fiber and the second multicore fiber can be emitted from the same direction. Therefore, it is possible to provide an optical fiber ribbon capable of easily performing alignment in a ribbon fiber including a plurality of multicore fibers. Note that the "same direction" as used herein does not only allow a case where the directions are completely the same, but also a case where there is a slight deviation, for example, a deviation of about ±1° between the normal direction of the first light-irradiated surface and the normal direction of the second light-irradiated surface.
[4] In the optical fiber ribbon according to [3], an axis of the virtual line and a normal direction of the first light-irradiated surface may face the same direction. Note that the "same direction" as used herein does not only allow a case where the directions are completely the same, but also a case where there is a slight deviation, for example, a deviation of about ±1° between the axis of the virtual line and the normal direction of the first light-irradiated surface.
[5] In the optical fiber ribbon according to any one of [1] to [4], arrangement of the plurality of first cores may be line-symmetric with respect to a virtual line passing through the center of the first multicore fiber at least in a range corresponding to the first light-irradiated surface. By being line-symmetric at least in a range corresponding to the first light-irradiated surface, the light transmitted through the optical fiber can be a luminance graph having symmetry.
[6] In the optical fiber ribbon according to any one of [1] to [5], arrangement of the plurality of first cores may be line-symmetric with respect to a virtual line passing through the center of the first multicore fiber. The line symmetry allows the light transmitted through the optical fiber to be a luminance graph having symmetry.
[7] In the optical fiber ribbon according to any one of [1] to [6], a width of the first light-irradiated surface may have a longer length than a diameter of the first core by 20 µm or more. In the optical fiber ribbon, the resin as a constituent requirement is unevenly distributed in some cases, but for example, if the core center is shifted from a predetermined position by about 10 µm (non-thickness deviation rate 70%), the optical fiber ribbon is allowed as a product. Therefore, even in the case of the ribbon fiber having such uneven distribution of the resin, by providing the first light-irradiated surface having the above-described width, the influence of the uneven distribution can be reduced to obtain the ribbon fiber in which the alignment of the first core is reliably performed.
[8] In the optical fiber ribbon according to any one of [1] to [7], the above-described virtual line may pass through at least three or more first cores. In this case, since the light for alignment passes through more cores, the alignment accuracy is improved, and it is possible to obtain a ribbon fiber in which alignment is more reliably performed in a ribbon fiber including a plurality of multicore fibers. The three or more first cores described herein may include a marker core having a refractive index higher than that of a cladding portion as in a normal first core, but having no trench or the like formed on the outer circumference of the cladding.
[9] In the optical fiber ribbon according to any one of [1] to [8], the first light-irradiated surface may be provided in each of two opposing regions where the virtual line intersects on the outer circumference of the first coating portion. In this case, even if the resin coating the cladding is unevenly distributed to some extent, the transmitted light has more symmetry, so that it is possible to provide a ribbon fiber that can easily perform alignment in the ribbon fiber including a plurality of multicore fibers.
[10] The optical fiber ribbon according to any one of [1] to [9] may further include a third multicore fiber including a plurality of third cores and third cladding covering the plurality of third cores, and a fourth multicore fiber including a plurality of fourth cores and fourth cladding covering the plurality of fourth cores. In this optical fiber ribbon, the first multicore fiber, the second multicore fiber, the third multicore fiber, and the fourth multicore fiber may be arranged in parallel in this order, and the coating member may cover the third multicore fiber and the fourth multicore fiber together with the first multicore fiber and the second multicore fiber. The coating member may further include a third coating portion covering the third multicore fiber and a fourth coating portion covering the fourth multicore fiber. A recess may be provided in at least one of a portion between the first coating portion and the second coating portion, a portion between the second coating portion and the third coating portion, and a portion between the third coating portion and the fourth coating portion. A third light-irradiated surface having a width larger than a diameter of the third core may be provided in a region where a virtual line passing through at least two or more of the third cores among the plurality of third cores or a virtual line passing through the center of the third multicore fiber intersects an outer circumference of the third coating portion. The third light-irradiated surface may include a curved surface having a radius of curvature of 0.5 mm or more or a flat surface. In addition, a fourth light-irradiated surface having a width larger than a diameter of the fourth core may be provided in a region where a virtual line passing through at least two or more of the fourth cores among the plurality of fourth cores or a virtual line passing through the center of the fourth multicore fiber intersects an outer circumference of the fourth coating portion. The fourth light-irradiated surface may include a curved surface having a radius of curvature of 0.5 mm or more or a flat surface. In this case, even in a case where the number of coated optical fiber ribbons is increased to four, it is possible to obtain a ribbon fiber that can be easily aligned. In addition, in this optical fiber ribbon, since a recess is provided in at least one of a portion between the first coating portion and the second coating portion, a portion between the second coating portion and the third coating portion, and a portion between the third coating portion and the fourth coating portion, each fiber can be easily separated.
[11] In the optical fiber ribbon according to [10], a normal direction of the first light-irradiated surface at an intersection of the first light-irradiated surface and the virtual line, a normal direction of the second light-irradiated surface at an intersection of the second light-irradiated surface and the virtual line, a normal direction of the third light-irradiated surface at an intersection of the third light-irradiated surface and the virtual line, and a normal direction of the fourth light-irradiated surface at an intersection of the fourth light-irradiated surface and the virtual line may all face the same direction. In this case, illumination light for alignment work of the cores in the first multicore fiber, the second multicore fiber, the third multicore fiber, and the fourth multicore fiber can be emitted from the same direction. Therefore, it is possible to provide an optical fiber ribbon capable of easily performing alignment in a ribbon fiber including a plurality of multicore fibers. Note that the "same direction" as used herein does not only allow a case where the directions are completely the same, but also a case where there is a slight deviation, for example, a deviation of about ±1° between the normal directions.
[12] A method for manufacturing an optical fiber ribbon according to an embodiment includes: preparing a first multicore fiber including a plurality of first cores and first cladding covering the plurality of first cores; preparing a second multicore fiber including a plurality of second cores and second cladding covering the plurality of second cores; covering the first multicore fiber and the second multicore fiber with a resin while arranging the first multicore fiber and the second multicore fiber in parallel; and irradiating a light-irradiated surface in a coating resin portion covering the first multicore fiber with light, and aligning the plurality of first cores in the first multicore fiber based on a result of the light irradiation. In this method for manufacturing an optical fiber ribbon, the light-irradiated surface is a surface provided in a region where a virtual line passing through at least two or more of the first cores among the plurality of first cores or a virtual line passing through the center of the first multicore fiber intersects an outer circumference of the coating resin portion, and the light-irradiated surface includes a width longer than a diameter of the first core and includes a curved surface having a radius of curvature of 0.5 mm or more or a flat surface.

This method for manufacturing an optical fiber ribbon includes irradiating a light-irradiated surface in a coating resin portion covering a first multicore fiber with light and aligning a plurality of first cores in the first multicore fiber based on a result of the light irradiation. Further, this light-irradiated surface is a surface provided in a region where a virtual line passing through at least two or more of the first cores among the plurality of first cores or a virtual line passing through the center of the first multicore fiber intersects an outer circumference of the coating resin portion, and the light-irradiated surface includes a width longer than a diameter of the first core and includes a curved surface having a radius of curvature of 0.5 mm or more or a flat surface. According to the simulation results by the present inventors, it has been found that even if there is a certain degree of uneven distribution (thickness deviation) in the resin covering the cladding in the optical fiber ribbon, the transmitted light has symmetry in a case where the arrangement of the first cores is aligned by providing such a light-irradiated surface. Therefore, according to this method for manufacturing an optical fiber ribbon, it is possible to obtain a ribbon fiber in which alignment of the plurality of first cores is reliably performed.

### [Details of Embodiment of Present Disclosure]

Specific examples of an optical fiber ribbon and a method for manufacturing the optical fiber ribbon according to an embodiment of the present disclosure will be described below with reference to the accompanying drawings. In the following description, the same reference signs will be used for the same elements or elements having the same functions, and redundant description will not be given. The present invention is not limited to these examples, indicated by the claims, and intended to include all modifications within the meaning and scope equivalent to the claims.

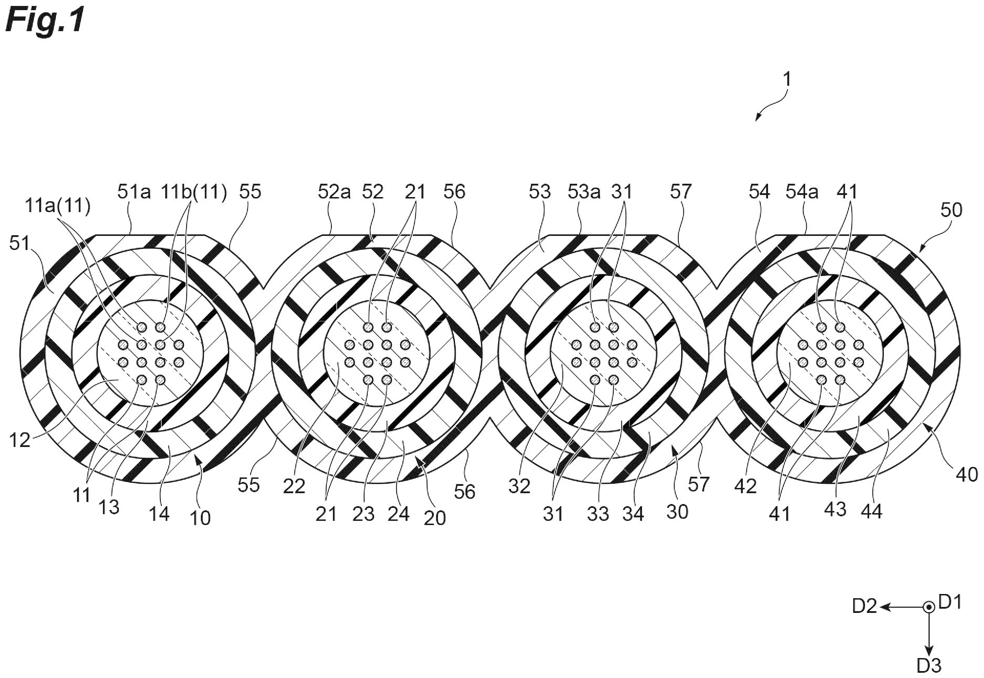

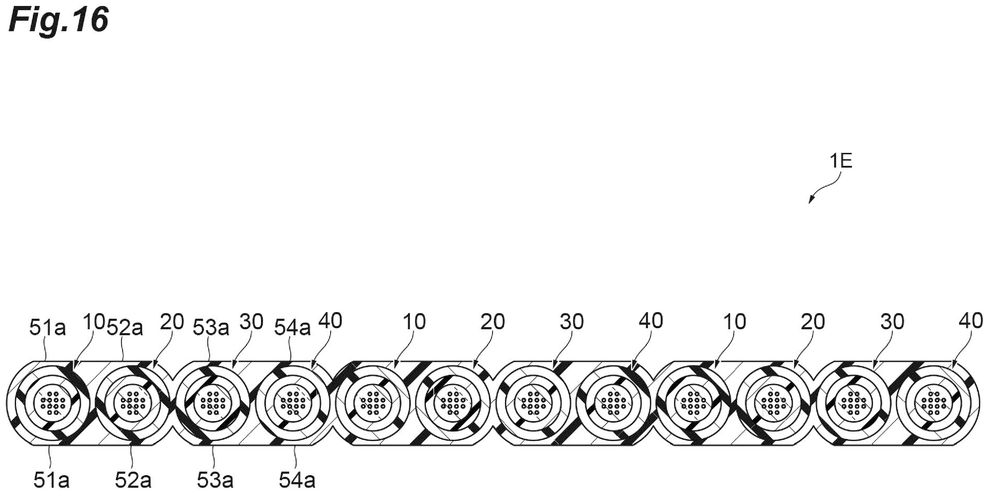

An exemplary optical fiber ribbon according to an embodiment will be described with reference to FIG. 1. FIG. 1 is a cross-sectional view of an optical fiber ribbon according to an embodiment. As illustrated in FIG. 1, an optical fiber ribbon 1 includes a plurality of multicore fibers 10, 20, 30, and 40, and a coating member 50. Each of the multicore fibers 10 to 40 extends along a first direction D1. In addition, each of the multicore fibers 10 to 40 is arranged in parallel along a second direction D2, and is entirely covered by the coating member 50. The optical fiber ribbon 1 is, for example, a four-core ribbon fiber, and recesses 55, 56, and 57 are provided between the fibers to enable single core separation. Note that, in this four-core ribbon, although the recesses 56 are provided, the recesses 55 and 57 are not provided, and the ribbon fiber may be formed of two pairs of fibers (see a modification of FIG. 16).

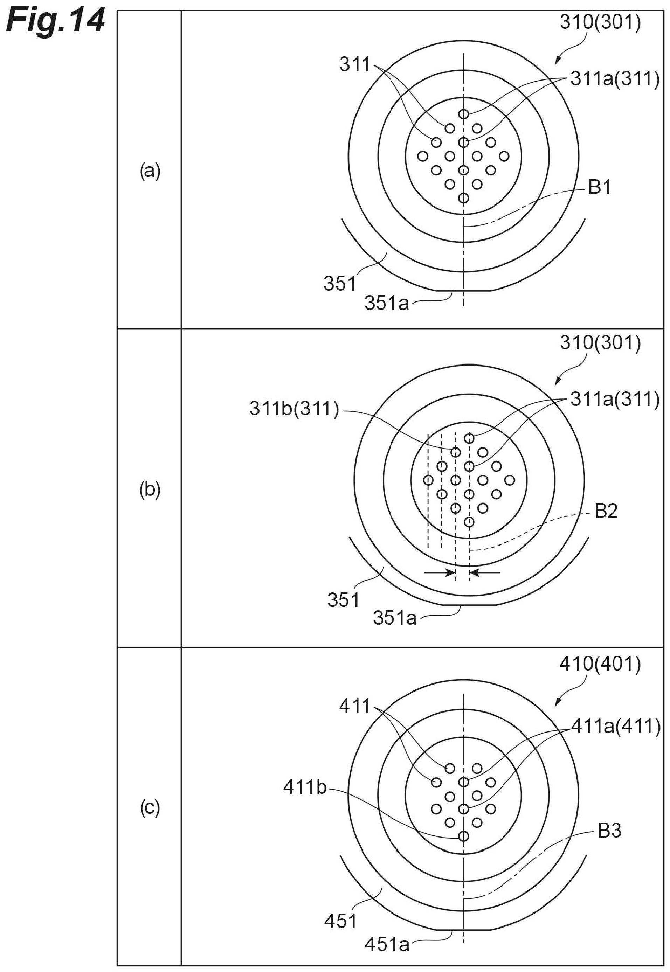

The multicore fiber 10 (first multicore fiber) includes a plurality of cores 11 (a plurality of first cores), cladding 12 (first cladding) covering the plurality of cores 11, a primary resin layer 13 covering the cladding 12, and a secondary resin layer 14 covering the primary resin layer 13. In the multicore fiber 10, for example, twelve cores 11 are arranged line-symmetrically with respect to a virtual line passing through the center of the multicore fiber 10 in the order of two, four, four, and two cores 11. Note that the twelve cores 11 may be arranged line-symmetrically with respect to a virtual line passing through the center of the multicore fiber 10 in a range corresponding to each of light-irradiated surfaces 51a to 54a to be described later. The diameter of the core 11 may be, for example, 5 µm to 15 µm. The diameter of the cladding 12 may be, for example, 120 µm to 130 µm, or 170 µm to 190 µm. The number of cores 11 is 12 cores in the example illustrated in FIG. 1, but is not limited thereto, and may be 16 cores (see FIG. 14), or may be another number of cores.

The core 11 is formed of pure silica (SiO₂) glass or a material in which silica glass contains germanium dioxide or a fluorine element. The cladding 12 is lower in refractive index than the core 11. The cladding 12 is formed of pure silica glass or a material in which a fluorine element is added to silica glass, for example. A trench lower in refractive index than the cladding 12 may be provided between each core 11 and the cladding 12.

The primary resin layer 13 covers the outer circumference of the cladding 12. More specifically, the primary resin layer 13 is in contact with the outer circumferential face of the cladding 12 and covers the entirety of the cladding 12. The secondary resin layer 14 further covers the outer circumference of the primary resin layer 13. More specifically, the secondary resin layer 14 is in contact with the outer circumferential face of the primary resin layer 13 and covers the entirety of the primary resin layer 13.

The primary resin layer 13 can be formed by curing an ultraviolet curable resin composition containing a photopolymerizable compound, a photopolymerization initiator, and a silane coupling agent. As the photopolymerizable compound, urethane (meth) acrylate or epoxy (meth) acrylate can be used, for example. The secondary resin layer 14 can be formed by curing a resin composition containing a urethane (meth) acrylate, a monomer, and a photopolymerization initiator. The secondary resin layer 14 is higher in elastic modulus than the primary resin layer 13, and the secondary resin layer 14 is harder than the primary resin layer 13. The primary resin layer 13 and the secondary resin layer 14 each has a thickness of 5 µm or more and 50 µm or less, for example.

The multicore fiber 20 (second multicore fiber) includes, similarly to the multicore fiber 10, a plurality of cores 21 (a plurality of second cores), cladding 22 (second cladding) covering the plurality of cores 21, a primary resin layer 23 covering the cladding 22, and a secondary resin layer 24 covering the primary resin layer 23. The multicore fiber 30 (third multicore fiber) includes, similarly to the multicore fiber 10, a plurality of cores 31 (a plurality of third cores), cladding 32 (third cladding) covering the plurality of cores 31, a primary resin layer 33 covering the cladding 32, and a secondary resin layer 34 covering the primary resin layer 33. The multicore fiber 40 (fourth multicore fiber) includes, similarly to the multicore fiber 10, a plurality of cores 41 (a plurality of fourth cores), cladding 42 (fourth cladding) covering the plurality of cores 41, a primary resin layer 43 covering the cladding 42, and a secondary resin layer 44 covering the primary resin layer 43. The cores, the claddings, the primary resin layers, and the secondary resin layers of the multicore fibers 20, 30, and 40 have the same structures as the cores 11, the claddings 12, the primary resin layers 13, and the secondary resin layers 14 of the multicore fiber 10, respectively, and thus, detailed description thereof is omitted.

The coating member 50 is formed of a ribbon resin. For example, the ribbon resin may contain a thermosetting resin such as a silicone resin, an epoxy resin, or a urethane resin, or an ultraviolet curable resin such as an epoxy acrylate, a urethane acrylate, or a polyester acrylate, from the viewpoint of the damage preventing property and the splitting ease of the optical fiber. The coating member 50 includes a first coating portion 51 covering the multicore fiber 10, a second coating portion 52 covering the multicore fiber 20, a third coating portion 53 covering the multicore fiber 30, and a fourth coating portion 54 covering the multicore fiber 40. Each of the coating portions 51 to 54 is in contact with the outer circumferential face of the corresponding multicore fiber (outer circumferential face of each secondary resin layer, and outer circumferential face of colored ink layer if there is a colored ink layer) and covers the entire multicore fiber. However, the coating member 50 only needs to cover each multicore fiber to such an extent that the multicore fiber is not unintentionally separated by the user, and may have a structure in which the entire corresponding multicore fiber is partially covered without the entire multicore fiber being covered.

The first coating portion 51 has a shape substantially corresponding to the outer circumference shape of the covered multicore fiber 10, and has, for example, a substantially circular cross-sectional shape. Similarly, the second coating portion 52, the third coating portion 53, and the fourth coating portion 54 have shapes substantially corresponding to the outer circumference shapes of the multicore fiber 20, the multicore fiber 30, and the multicore fiber 40 to be covered, respectively, and have, for example, a substantially circular cross-sectional shape.

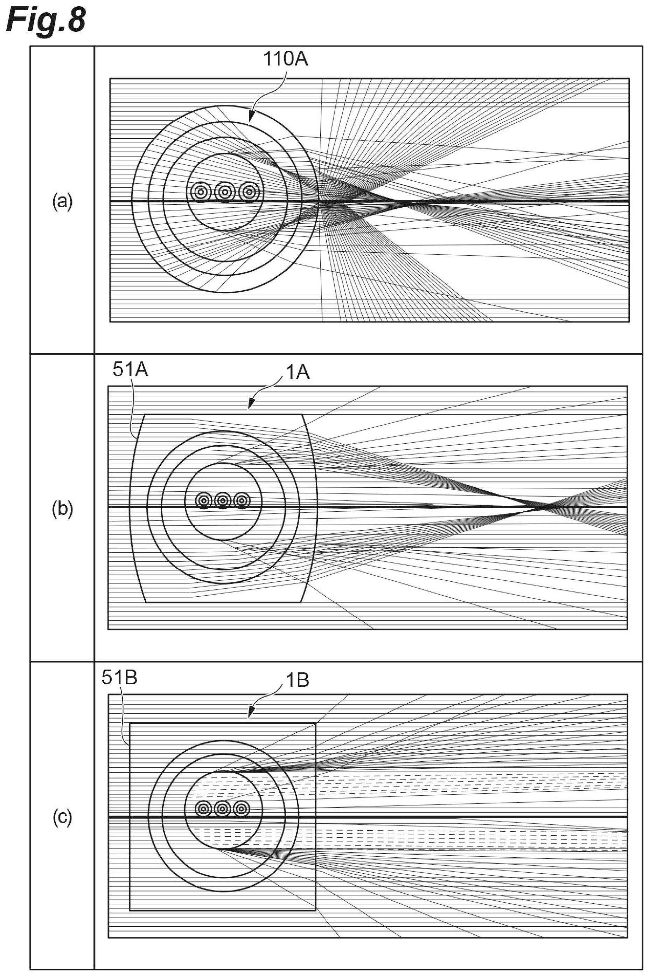

Although details will be described later, light-irradiated surfaces 51a, 52a, 53a, and 54a formed of flat surfaces are formed on the first coating portion 51, the second coating portion 52, the third coating portion 53, and the fourth coating portion 54, respectively. The light-irradiated surfaces 51a to 54a are not necessarily flat surfaces but curved surfaces having a radius of curvature of 0.5 mm or more (see, for example, part (b) of FIG. 8). In a case where the light-irradiated surfaces 51a to 54a are formed of curved surfaces, the radius of curvature may be larger than the radius of the curved surface of the portion other than the light-irradiated surfaces 51a to 54a in the coating portions 51 to 54. In a case where the light-irradiated surfaces 51a to 54a are formed of flat surfaces, the radius of curvature can be regarded as infinite.

The light-irradiated surface 51a is provided in a region where a virtual line passing through two or more cores 11a or a virtual line passing through two or more cores 11b, or a virtual line passing through the center (center line) of the multicore fiber 10 intersects with the outer circumference of the first coating portion 51. In other words, the light-irradiated surface 51a is provided on one side (upper side in the drawing) in a third direction D3 with respect to the core 11. Similarly to the light-irradiated surface 51a, the light-irradiated surfaces 52a, 53a, and 54a are provided in regions where virtual lines passing through two or more cores 21, 31, and 41 or virtual lines passing through the centers (center lines) of the multicore fibers 20, 30, and 40 intersect the outer circumferences of the second coating portion 52, the third coating portion 53, and the fourth coating portion 54, respectively.

The widths of the light-irradiated surfaces 51a, 52a, 53a, and 54a along the second direction D2 are larger than the diameters of the cores 11, 21, 31, and 41 of the multicore fibers 10, 20, 30, and 40. The widths of the light-irradiated surfaces 51a, 52a, 53a, and 54a along the second direction D2 may be equal to or larger than a width obtained by adding 20 µm to the diameters of the cores 11, 21, 31, and 41 of the multicore fibers 10, 20, 30, and 40. In addition, the widths of the light-irradiated surfaces 51a, 52a, 53a, and 54a along the second direction D2 may be widths that are located at the center of each of the multicore fibers 10, 20, 30, and 40 and are longer than the center distance (core pitch) between the two cores 11 (for example, the core 11a and the core 11b), 21, 31, and 41 adjacent in the second direction.

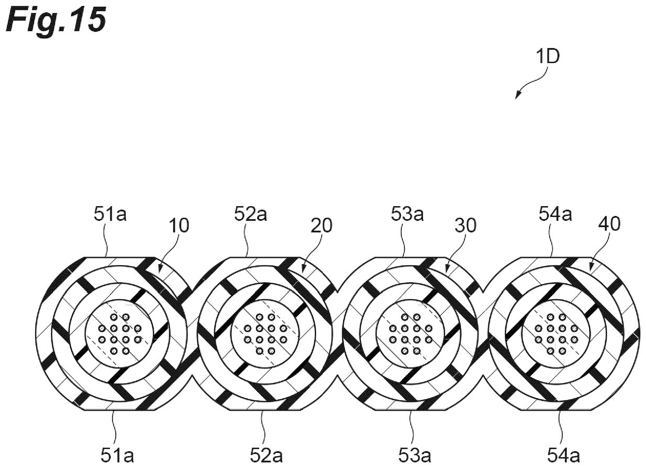

In addition, each of the light-irradiated surfaces 51a, 52a, 53a, and 54a is formed to face the same direction (upward in the third direction D3). In other words, the light-irradiated surfaces 51a to 54a are formed such that the normal direction of the light-irradiated surface 51a at the intersection point between the light-irradiated surface 51a and the virtual line in the multicore fiber 10, the normal direction of the light-irradiated surface 52a at the intersection point between the light-irradiated surface 52a and the virtual line in the multicore fiber 20, the normal direction of the light-irradiated surface 53a at the intersection point between the light-irradiated surface 53a and the virtual line in the multicore fiber 30, and the normal direction of the light-irradiated surface 54a at the intersection point between the light-irradiated surface 54a and the virtual line in the multicore fiber 40 face the same direction. The "same direction" as used herein does not only allow a case where the normal directions are completely the same, but also a case where there is a slight deviation, for example, a deviation of about ±1° between the normal directions. Any of the light-irradiated surfaces 51a to 54a may be formed to face a direction different from other light-irradiated surfaces. In the example illustrated in FIG. 1, one of the light-irradiated surfaces 51a to 54a is provided in each of the coating portions 51 to 54, but two or more light-irradiated surfaces may be provided. In this case, for example, the two light-irradiated surfaces 51a may be provided in the coating portion 51 facing each other in the third direction D3 (see, for example, FIG. 15).

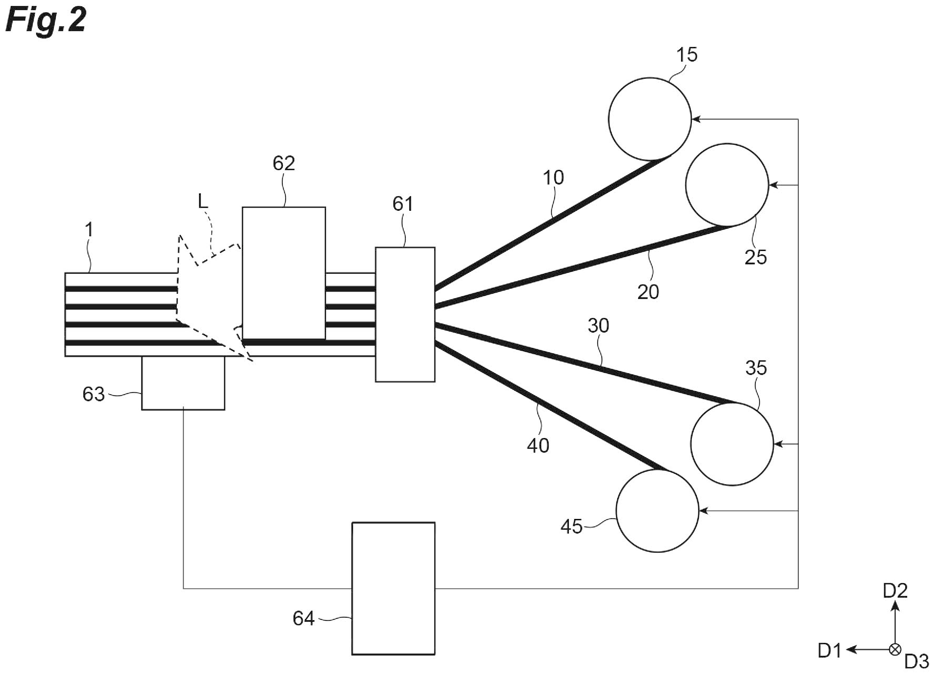

Next, a method for manufacturing the above-described optical fiber ribbon 1 will be described with reference to FIG. 2. FIG. 2 is a schematic diagram illustrating a method for manufacturing the optical fiber ribbon illustrated in FIG. 1. In order to manufacture the optical fiber ribbon 1, first, the multicore fibers 10, 20, 30, and 40 are prepared. The multicore fibers 10, 20, 30, and 40 are in a state of being wound around corresponding supply rolls 15, 25, 35, and 45, respectively, and each fiber is in a state of being drawn out from each roll.

In this manner, the multicore fibers 10, 20, 30, and 40 drawn out from the supply rolls 15, 25, 35, and 45, respectively, are covered with the resin while being arranged in parallel with each other along the second direction D2 in a die 61. This resin is a ribbon resin for forming the coating member 50, and contains a thermosetting resin such as a silicone resin, an epoxy resin, or a urethane resin, or an ultraviolet curable resin such as an epoxy acrylate, a urethane acrylate, or a polyester acrylate. Such a resin is introduced into the die 61, and the multicore fibers 10, 20, 30, and 40 aligned in the die 61 are coated with the ribbon resin and covered. Thereafter, the coated resin is irradiated with ultraviolet rays (not illustrated), and the ribbon resin is cured. The molding holes located inside the die 61 and through which the multicore fibers 10, 20, 30, and 40 pass have a cross-sectional shape corresponding to the outer shape of the coating member 50 illustrated in FIG. 1.

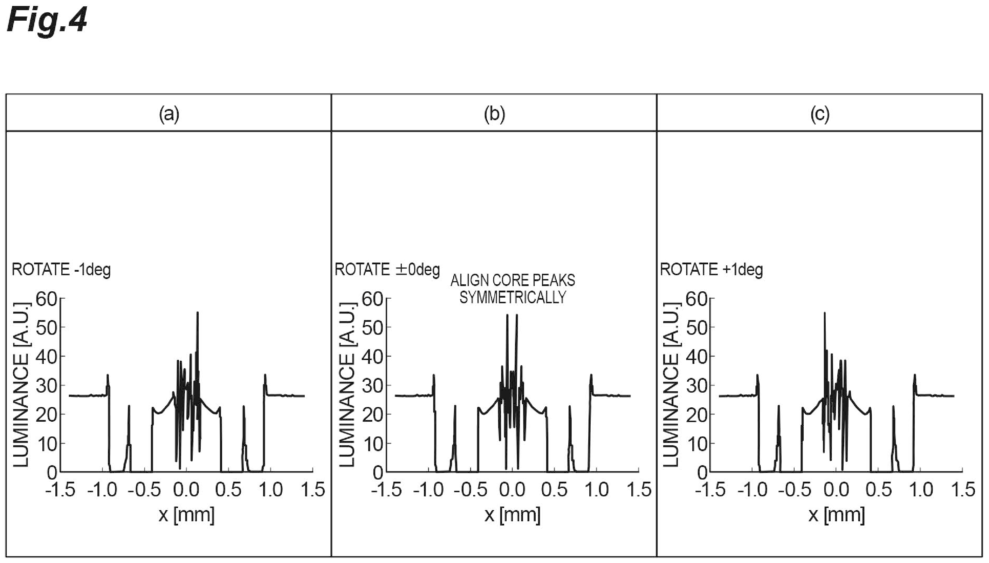

If the coating member 50 is formed, the light-irradiated surfaces 51a, 52a, 53a, and 54a in the coating resin portion covering the multicore fibers 10, 20, 30, and 40 are irradiated with the illumination light L from a light irradiation device 62, and luminance data that is a shadow of light transmitted through the optical fiber ribbon 1 is received by a light receiving device 63. The light receiving device 63 is, for example, a camera. The light received by the light receiving device 63 can be expressed as, for example, luminance data illustrated in parts (a) to (c) of FIG. 4. The luminance data illustrated in parts (a) to (c) of FIG. 4 is a graph of luminance data corresponding to the multicore fibers. By detecting whether or not the graph of the luminance data has symmetry or the like, it is possible to determine whether or not the arrangement of the cores is aligned in the multicore fibers 10, 20, 30, and 40.

Then, a plurality of cores in each of the multicore fibers 10, 20, 30, and 40 is aligned based on a result of light irradiation (graph of luminance data). In this alignment, the luminance data from the light receiving device 63 is analyzed by a control device 64, and the angle or the like of each of the supply rolls 15, 25, 35, and 45 is finely adjusted by a motor (not illustrated) or the like so that the luminance data has symmetry based on the analysis result. As a result, the position of the cores is adjusted.

In the manufacturing method according to the present embodiment, such irradiation of the illumination light L is performed on the light-irradiated surfaces 51a, 52a, 53a, and 54a provided corresponding to the multicore fibers 10, 20, 30, and 40. As described above, since the light-irradiated surfaces 51a to 54a are flat surfaces having a predetermined width or curved surfaces having a radius of curvature of 0.5 mm or more, even if the resin in each of the multicore fibers 10, 20, 30, and 40 is unevenly distributed, the influence on the symmetry of the luminance data of the light transmitted through the fiber is reduced. Hereinafter, it will be described that the influence on the alignment of the core is reduced by providing such a light-irradiated surface even if there is uneven distribution (thickness deviation) of the resin.

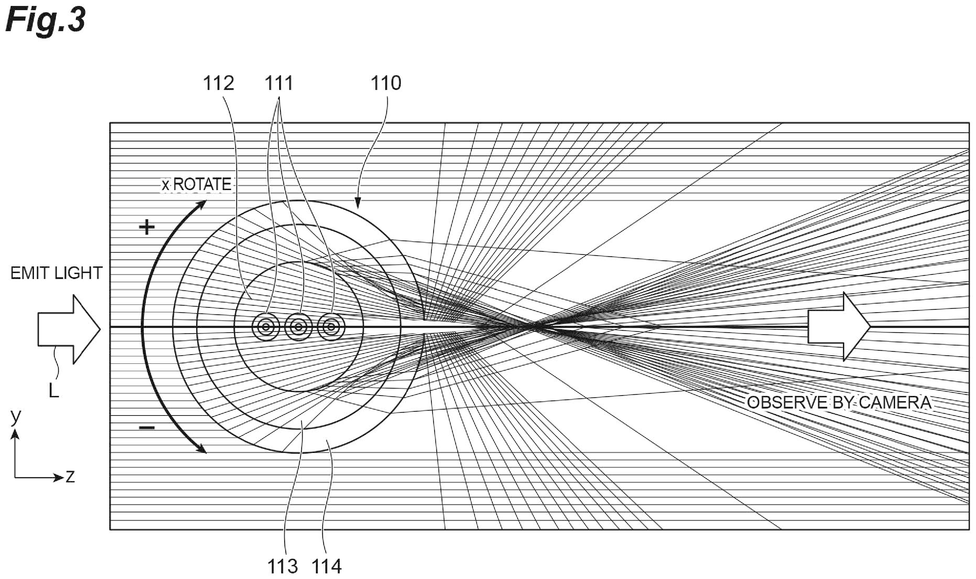

First, with reference to FIGS. 3 and 4, a general method will be described in which a side surface of a multicore fiber is irradiated with illumination light to acquire luminance data, and core alignment of the multicore fiber is performed using symmetry of the luminance data. FIG. 3 is a diagram for explaining the core alignment by light irradiation in a general multicore fiber. Parts (a), (b), and (c) of FIG. 4 are diagrams illustrating the measurement results of the symmetry in the core alignment illustrated in FIG. 3, and illustrate cases where the alignment angle is -1 deg, ±0 deg, and +1 deg, respectively. As illustrated in FIG. 3, a general multicore fiber 110 includes a plurality of cores 111, cladding 112, a primary resin layer 113, and a secondary resin layer 114. Here, for ease of description, three cores 111 are used, but the same applies to a case where more cores 111 are provided. The illumination light L is emitted from the side of the multicore fiber 110, and transmitted light is received by a camera as a light receiving device to perform observation. A graph of luminance data received by such a camera is, for example, as illustrated in parts (a) to (c) of FIG. 4. Then, the multicore fiber 110 is slightly rotated in the plus (+) or minus (-) direction illustrated in FIG. 3 to perform alignment such that the graph of the luminance data has symmetry as illustrated in part (b) of FIG. 4.

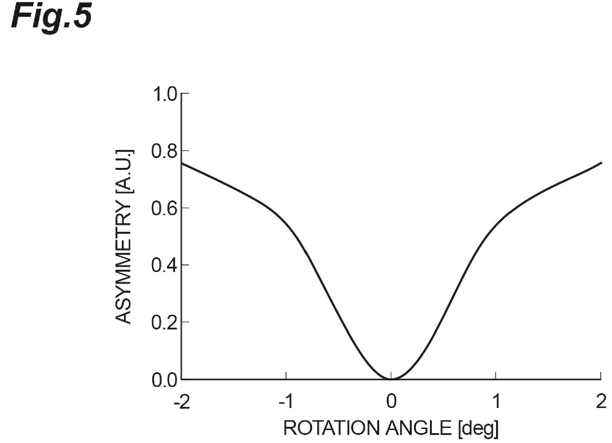

Such symmetry of the luminance data can also be illustrated as, for example, an asymmetry graph illustrated in FIG. 5. In the graph of FIG. 5, a value obtained by integrating the square of the difference between the normal signal of the luminance data and the signal obtained by horizontally inverting the luminance data is displayed. If the luminance data is completely symmetric, the value is 0, and the value increases as the asymmetry increases. It is known from experience that when such a value of asymmetry is, for example, 0.2 or less, the arrangement of cores in a multicore fiber is aligned and appropriate. Meanwhile, as illustrated in part (b) of FIG. 6, the resin may be unevenly distributed to the outside of the cladding 112. Part (a) of FIG. 6 illustrates a case where there is no uneven distribution. In a case where there is no uneven distribution of the resin as illustrated in part (a) of FIG. 6, if the core arrangement is aligned as illustrated in part (a) of FIG. 7, luminance data having symmetry can be obtained. On the other hand, in a case where the resin is unevenly distributed as illustrated in part (b) of FIG. 6, although the cores 111 themselves are aligned, the symmetry of the luminance data is lost as illustrated in part (b) of FIG. 7, and asymmetric luminance data is obtained. In this case, if the determination is made only by looking at the luminance data, it can be determined that the cores 111 of the multicore fiber 110A are not aligned.

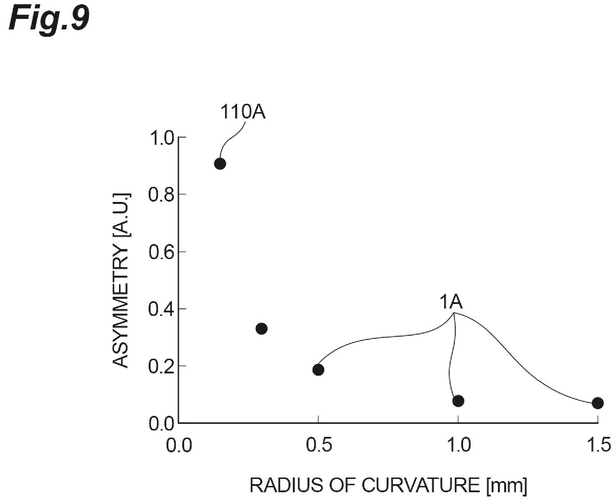

Parts (a), (b), and (c) of FIG. 8 illustrate examples of the light transmission state when the light-irradiated surface is changed to a curved surface having a large radius of curvature or a flat surface in the case where the coating resin of the ribbon fiber is unevenly distributed. Part (a) of FIG. 8 illustrates the general multicore fiber 110A described above, and parts (b) and (c) of FIG. 8 illustrate a multicore fiber provided with a light-irradiated surface corresponding to the present embodiment described above. All parts (a), (b), and (c) in FIG. 8 have the core arrangement aligned. FIG. 9 is a diagram illustrating a relationship between asymmetry and a radius of curvature of a light-irradiated surface in each aspect illustrated in parts (a) to (c) of FIG. 8. As described above, in the structure illustrated in part (a) of FIG. 8, if the resin is unevenly distributed, the light through which the illumination light is transmitted is broken (asymmetric). However, as illustrated in part (b) of FIG. 8, it has been found from the simulation that the illumination light maintains symmetry if the light-irradiated surface 51A having a curved surface with a radius of curvature of 0.5 mm or more is provided on the optical fiber ribbon 1A. Similarly, as illustrated in part (c) of FIG. 8, it has been found from the simulation that the illumination light maintains symmetry if the light-irradiated surface 51B having a flat surface with an infinite radius of curvature is provided on the optical fiber ribbon 1B.

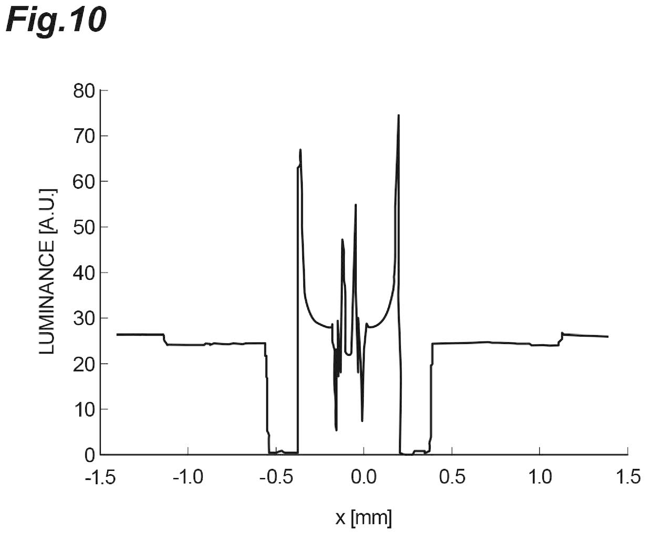

FIG. 9 illustrates a table plotting asymmetry in a case where the curvature of the curved surface forming the light-irradiated surface 51A is changed. As is clear from FIG. 9, it has been found that by setting the radius of curvature to 0.5 mm or more, the value of asymmetry in transmitted light when the multicore fiber is irradiated with the illumination light L can be set to 0.2 or less, which is the prescribed value described above. In addition, FIG. 10 illustrates luminance data in a case where the light-irradiated surface 51B is formed of a flat surface as illustrated in part (c) of FIG. 8. As is clear from FIG. 10, it has been found that since the light-irradiated surface 51B is a flat surface, even if the resin is unevenly distributed, a graph having clear symmetry can be obtained as long as the cores are aligned.

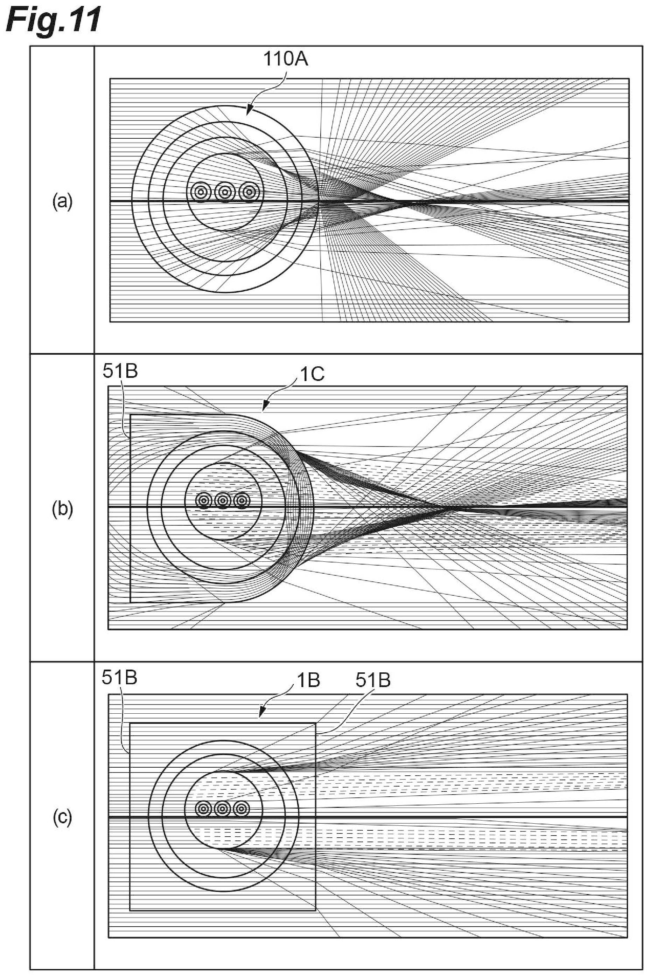

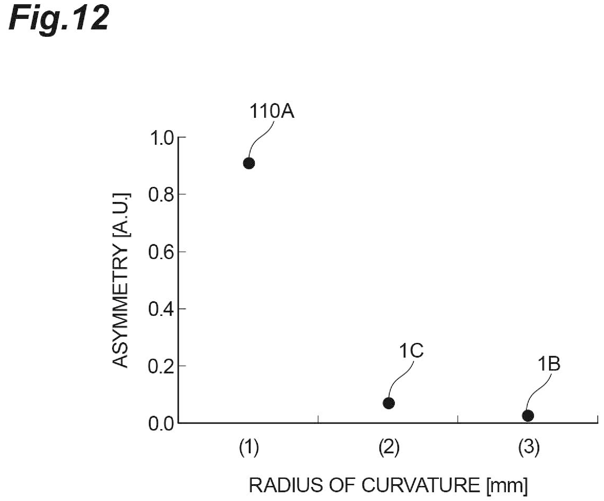

Next, an example in which a case where the light-irradiated surface 51B is provided on one side or both sides is compared will be described with reference to FIG. 11. Part (a) of FIG. 11 illustrates a transmission state when the general multicore fiber 110A is irradiated with the illumination light in a case where the resin is unevenly distributed, part (b) of FIG. 11 illustrates a transmission state when the multicore fiber (optical fiber ribbon 1C) provided with the light-irradiated surface 51B on one side is irradiated with the illumination light in a case where the resin is unevenly distributed, and part (c) of FIG. 11 illustrates a transmission state when the multicore fiber provided with the light-irradiated surfaces 51B on both sides is irradiated with the illumination light in a case where the resin is unevenly distributed. All parts (a), (b), and (c) in FIG. 11 have the core arrangement aligned. In a case where the resin is unevenly distributed as illustrated in parts (b) and (c) of FIG. 11, it is clear that the transmitted light has symmetry by providing the light-irradiated surface 51B with a flat surface on one side or both sides. FIG. 12 plots the values of asymmetry in the multicore fibers illustrated in parts (a), (b), and (c) of FIG. 11. As is clear from FIG. 12, it can be seen that the value of asymmetry is much smaller than 0.2 as a reference by providing the light-irradiated surface 51B on one side or both sides. In addition, it can be seen that in a case where the light-irradiated surface 51B is provided on both sides, the value of asymmetry is further lower than the case where the light-irradiated surface 51B is provided on one side. That is, it can be seen that core alignment can be more reliably performed in the case where the light-irradiated surface 51B is provided on both sides. However, since the value of asymmetry is sufficiently small even in the case where the light-irradiated surface 51B is provided on one side, it is obvious that core alignment can be reliably performed even in the case where the light-irradiated surface 51B is provided on one side.

As described above, the light-irradiated surface having a width longer than the diameter of the core is provided in the region where the virtual line passing through at least two or more cores or the virtual line passing through the center of the multicore fiber (center line) intersects the outer circumference of the coating portion, and the light-irradiated surface includes the curved surface having the radius of curvature of 0.5 mm or more or the flat surface, so that it can be seen that the core alignment can be performed without problems even if the resin around the cladding is unevenly distributed.

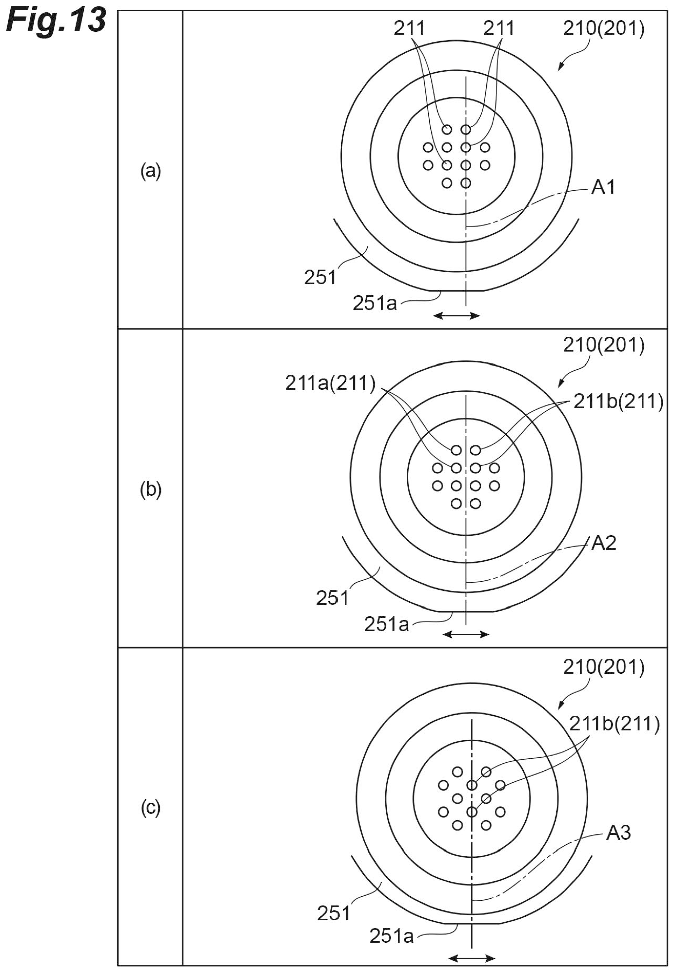

Next, an example of a positional relationship between each light-irradiated surface and the cores of the multicore fiber in the optical fiber ribbon according to the present embodiment will be described with reference to FIGS. 13 and 14. In FIG. 13, an example of an optical fiber ribbon 201 including a multicore fiber 210 will be described. Although only one multicore fiber 210 is illustrated in FIG. 13, the optical fiber ribbon 201 includes a plurality of multicore fibers 210. In the multicore fiber illustrated in FIG. 13, 12 cores 211 are provided. In addition, parts (a) and (b) of FIG. 14 will describe an example of an optical fiber ribbon 301 including a multicore fiber 310. In part (c) of FIG. 14 will describe an example of an optical fiber ribbon 401 including a multicore fiber 410. Although only one multicore fiber 310 or 410 is illustrated in FIG. 14, the optical fiber ribbon 301 and 401 include a plurality of multicore fibers 310 and 410, respectively. In the multicore fiber 310 illustrated in parts (a) and (b) of FIG. 14, 16 cores 311 are provided. In the multicore fiber 410 illustrated in part (c) of FIG. 14, 12 cores 411 and one core marker 411b are provided.

Returning to FIG. 13, the description will be continued. In the example illustrated in part (a) of FIG. 13, a light-irradiated surface 251a formed of a flat surface is formed in a region where a virtual line A1 passing through the four cores 211 in a row shifted to the right from the center intersects with the outer circumference of the coating portion 251. The axis of the virtual line A1 faces the same direction as the normal direction of the light-irradiated surface 251a. The width of the light-irradiated surface 251a is longer than the diameter of the core 211 by 20 µm or more. The light-irradiated surface 251a is not necessarily a flat surface but may be a curved surface having a large radius of curvature of 0.5 mm or more. The same applies to the following examples. According to the structure of this example, it is easy to select and align a core to be aligned.

In the example illustrated in part (b) of FIG. 13, a light-irradiated surface 251a formed of a flat surface is formed in a region where a virtual line A2 (center line) passing through between the four cores 211a in a row shifted to the left from the center and the four cores 211b in a row shifted to the right from the center intersects with the outer circumference of the coating portion 251. In this case, the virtual line A2 passes through the center of the multicore fiber 210. The axis of the virtual line A2 faces the same direction as the normal direction of the light-irradiated surface 251a. The width of the light-irradiated surface 251a is longer than the diameter of the core 211 (cores 211a and 211b) by 20 µm or more. According to the structure of this example, the signal of the luminance data through which the irradiation light is transmitted becomes weak, but symmetry is easily obtained.

In the example illustrated in part (c) of FIG. 13, the multicore fiber 210 illustrated in part (a) of FIG. 13 is rotated by 45 degrees. In this example, a light-irradiated surface 251a formed of a flat surface is formed in a region where a virtual line A3 passing through the two cores 211c on the center line passing through the center of the fiber intersects with the outer circumference of the coating portion 251. The axis of the virtual line A3 faces the same direction as the normal direction of the light-irradiated surface 251a. The width of the light-irradiated surface 251a is longer than the diameter of the core 211 (core 211c) by 20 µm or more. According to the structure of this example, it is possible to select and align the core to be subjected to core alignment, and it is possible to improve the symmetry of the luminance data when the illumination light is transmitted.

In the example illustrated in part (a) of FIG.14, a light-irradiated surface 351a formed of a flat surface is formed in a region where a virtual line B1 (center line) passing through the four cores 311a on the center line passing through the center of the multicore fiber 310 intersects with the outer circumference of the coating portion 351. The axis of the virtual line B1 faces the same direction as the normal direction of the light-irradiated surface 351a. The width of the light-irradiated surface 351a is longer than the diameter of the core 311 (core 311a) by 20 µm or more. The light-irradiated surface 351a is not necessarily a flat surface but may be a curved surface having a large radius of curvature of 0.5 mm or more. The same applies to the following examples. According to the structure of this example, it is possible to select and align the core to be subjected to core alignment, and it is possible to improve the symmetry of the luminance data when the illumination light is transmitted.

In the example illustrated in part (b) of FIG.14, similarly to the example illustrated in part (a) of FIG. 14, a light-irradiated surface 351a formed of a flat surface is formed in a region where a virtual line B2 passing through the four cores 311a on the center line passing through the center of the multicore fiber 310 intersects with the outer circumference of the coating portion 351. The axis of the virtual line B2 faces the same direction as the normal direction of the light-irradiated surface 351a. However, in this example, the pitch between the core 311a on the center line and the core 311b located outside is formed to be larger than the other core pitches. Other structures are similar to those in the example illustrated in part (a) of FIG. 14. According to the structure of this example, since the interval between the core 311a to be subjected to core alignment and the core 311b and the like not for core alignment is widened, it is possible to reduce the overlapping of the cores by the rotation at the time of alignment and to perform alignment with high accuracy.

In the example illustrated in part (c) of FIG.14, a core marker 411b is further included for the multicore fiber 210 illustrated in part (c) of FIG. 13, and a light-irradiated surface 451a formed of a flat surface is formed in a region where a virtual line B3 (center line) passing through the two cores 411a on the center line passing through the center of the fiber and the core marker 411b intersects with the outer circumference of the coating portion 451. The axis of the virtual line B3 faces the same direction as the normal direction of the light-irradiated surface 451a. The width of the light-irradiated surface 451a is longer than the diameters of the core 411a and the core marker 411b by 20 µm or more. According to the structure of this example, similarly to the example illustrated in part (c) of FIG. 13, it is possible to select and align the core to be subjected to core alignment, and it is possible to improve the symmetry of the luminance data when the illumination light is transmitted. Furthermore, since the marker is added, the detection sensitivity can be enhanced. The above core arrangement is an example, and other arrangements may be used.

As described above, according to the optical fiber ribbon 1 according to the present embodiment, the light-irradiated surfaces 51a, 52a, 53a, and 54a each having a width larger than the diameter of the core are provided in a region where a virtual line passing through at least two or more cores among the plurality of cores 11, 21, 31, and 41 or a virtual line passing through the center of each multicore fiber (such as a center line) intersects with the outer circumference of the coating portions 51, 52, 53, and 54. Then these light-irradiated surfaces 51a to 54a are curved surfaces having a radius of curvature of 0.5 mm or more or flat surfaces. In this case, according to the above-described simulation results by the present inventors (for example, in FIGS. 8, 9, etc.), it has been found that even if there is a certain degree of uneven distribution (thickness deviation) in the resin coating the cladding in the optical fiber ribbon, the transmitted light has symmetry in a case where the arrangement of the cores is aligned by making the illumination light enter from the light-irradiated surface having the above structure. Therefore, according to this optical fiber ribbon 1, it is possible to obtain a ribbon fiber in which alignment of the plurality of cores 11, 21, 31, and 41 is reliably performed.

Further, in the optical fiber ribbon 1, recesses 55, 56, and 57 are provided between the respective coating portions. Therefore, each fiber can be easily separated. That is, it can be used as a ribbon fiber which enables single core separation.

In the optical fiber ribbon 1 according to the present embodiment, the light-irradiated surfaces 51a, 52a, 53a, and 54a face the same direction. Therefore, the illumination light L for alignment work of the cores in the multicore fibers 10, 20, 30, and 40 can be emitted from the same direction. Therefore, it is possible to provide an optical fiber ribbon capable of easily performing alignment in a ribbon fiber including a plurality of multicore fibers.

In the optical fiber ribbon 1 according to the present embodiment, the width of each of the light-irradiated surfaces 51a, 52a, 53a, and 54a is longer than the diameter of each of the cores 11, 21, 31, and 41 by 20 µm or more. In the optical fiber ribbon 1, the resin as a constituent requirement is unevenly distributed in some cases, but for example, if the core center is shifted from a predetermined position by about 10 µm (non-thickness deviation rate 70%), the optical fiber ribbon 1 is allowed as a product. Therefore, even in the case of the ribbon fiber having such uneven distribution of the resin, by providing the light-irradiated surfaces 51a to 54a having the above-described width, the influence of the uneven distribution can be reduced to obtain the ribbon fiber in which the alignment of the core is reliably performed.

In the optical fiber ribbon according to the present embodiment, virtual lines defining the positions of the light-irradiated surfaces 51a, 52a, 53a, and 54a may pass through at least three or more cores. In this case, it is possible to obtain a ribbon fiber in which alignment is more reliably performed in a ribbon fiber including a plurality of multicore fibers.

In the optical fiber ribbon 1 according to the present embodiment, all of the light-irradiated surfaces 51a, 52a, 53a, and 54a may be flat surfaces. In this case, the formation accuracy of each light-irradiated surface can be easily improved.

Although the optical fiber ribbon 1 and the method for manufacturing the same according to the present disclosure have been described in detail above, the present invention is not limited to the above embodiments, and can be applied to various embodiments and modifications. For example, in the above description, in each of the multicore fibers 10, 20, 30, and 40, the light-irradiated surfaces 51a, 52a, 53a, and 54a are provided on one side. However, as illustrated in FIG. 15, an optical fiber ribbon 1D in which the light-irradiated surfaces 51a to 54a are provided on both sides of each of the multicore fibers 10, 20, 30, and 40 may be used. In this case, each of the light-irradiated surfaces 51a to 54a may be a flat surface or a curved surface having a radius of curvature of 0.5 mm or more.

In the above description, the optical fiber ribbon including four (or two pairs) multicore fibers has been described, but the present invention is not limited thereto. That is, it is apparent to those skilled in the art that the contents of the present disclosure can be applied to any optical fiber ribbon including two or more multicore fibers. For example, as illustrated in FIG. 16, the optical fiber ribbon 1E including 12 (or six pairs) multicore fibers 10, 20, 30, and 40 (optical fibers), which are more than four (or two pairs), may be used. Also in this case, the light-irradiated surfaces 51a to 54a are provided in the region where the virtual line in each optical fiber intersects the outer circumference of the coating portion, and it is possible to obtain a ribbon fiber in which alignment of a plurality of cores in each optical fiber is reliably performed in the same manner as described above.

### Reference Signs List

1, 1A, 1B, 1C, 1D, 1E Optical fiber ribbon
10 Multicore fiber (first multicore fiber)
11, 11a, 11b Core (first core)
12 Cladding (first cladding)
13, 23, 33, 43 Primary resin layer
14, 24, 34, 44 Secondary resin layer
15, 25, 35, 45 Supply roll
20 Multicore fiber (second multicore fiber)
21 Core (second core)
22 Cladding (second cladding)
30 Multicore fiber (third multicore fiber)
31 Core (third core)
32 Cladding (third cladding)
40 Multicore fiber (fourth multicore fiber)
41 Core (fourth core)
42 Cladding (fourth cladding)
50 Coating member
51 First coating portion
51a Light-irradiated surface (first light-irradiated surface)
51A, 51B Light-irradiated surface
52 Second coating portion
52a Light-irradiated surface (second light-irradiated surface)
53 Third coating portion
53a Light-irradiated surface (third light-irradiated surface)
54 Fourth coating portion
54a Light-irradiated surface (fourth light-irradiated surface)
55, 56, 57 Recess
61 Die
62 Light irradiation device
63 Light receiving device
64 Control device
110, 110A Multicore fiber
111 Core
112 Cladding
113 Primary resin layer
114 Secondary resin layer
201, 301, 401 Optical fiber ribbon
210, 310, 410 Multicore fiber
211, 211a, 211b, 211c, 311, 311a, 311b, 411, 411a Core
251, 351, 451 Coating portion
251a, 351a, 451a Light-irradiated surface
411b Core marker
A1, A2, A3, B1, B2, B3 Virtual line
L Illumination light

## Claims

1. An optical fiber ribbon comprising:
a first multicore fiber including a plurality of first cores and first cladding covering the plurality of first cores;
a second multicore fiber including a plurality of second cores and second cladding covering the plurality of second cores, the second multicore fiber being arranged in parallel with the first multicore fiber; and
a coating member at least partially covering the first multicore fiber and the second multicore fiber,
wherein the coating member includes a first coating portion covering the first multicore fiber and a second coating portion covering the second multicore fiber, and
wherein a first light-irradiated surface having a width larger than a diameter of the first core is provided in at least one region where a virtual line passing through at least two or more of the first cores among the plurality of first cores or a virtual line passing through the center of the first multicore fiber intersects an outer circumference of the first coating portion, and the first light-irradiated surface includes a curved surface having a radius of curvature of 0.5 mm or more or a flat surface.

2. The optical fiber ribbon according to claim 1,
wherein a second light-irradiated surface having a width larger than a diameter of the second core is provided in at least one region where a virtual line passing through at least two or more of the second cores among the plurality of second cores or a virtual line passing through the center of the second multicore fiber intersects an outer circumference of the second coating portion, and the second light-irradiated surface includes a curved surface having a radius of curvature of 0.5 mm or more or a flat surface.

3. The optical fiber ribbon according to claim 2,
wherein a normal direction of the first light-irradiated surface at an intersection of the first light-irradiated surface and the virtual line faces the same direction as a normal direction of the second light-irradiated surface at an intersection of the second light-irradiated surface and the virtual line.

4. The optical fiber ribbon according to claim 3,
wherein an axis of the virtual line and a normal direction of the first light-irradiated surface face the same direction.

5. The optical fiber ribbon according to any one of claims 1 to 4,
wherein arrangement of the plurality of first cores is line-symmetric with respect to a virtual line passing through the center of the first multicore fiber at least in a range corresponding to the first light-irradiated surface.

6. The optical fiber ribbon according to any one of claims 1 to 5,
wherein arrangement of the plurality of first cores is line-symmetric with respect to a virtual line passing through the center of the first multicore fiber.

7. The optical fiber ribbon according to any one of claims 1 to 6,
wherein a width of the first light-irradiated surface has a longer length than a diameter of the first core by 20 µm or more.

8. The optical fiber ribbon according to any one of claims 1 to 7,
wherein the virtual line passes through at least three or more of the first cores.

9. The optical fiber ribbon according to any one of claims 1 to 8,
wherein the first light-irradiated surface is provided in each of two opposing regions where the virtual line intersects on the outer circumference of the first coating portion.

10. The optical fiber ribbon according to claim 2, further comprising:
a third multicore fiber including a plurality of third cores and third cladding covering the plurality of third cores;
a fourth multicore fiber including a plurality of fourth cores and fourth cladding covering the plurality of fourth cores,
wherein the first multicore fiber, the second multicore fiber, the third multicore fiber, and the fourth multicore fiber are arranged in parallel in this order,
wherein the coating member covers the third multicore fiber and the fourth multicore fiber together with the first multicore fiber and the second multicore fiber,
wherein the coating member further includes a third coating portion covering the third multicore fiber and a fourth coating portion covering the fourth multicore fiber, and a recess is provided in at least one of a portion between the first coating portion and the second coating portion, a portion between the second coating portion and the third coating portion, and a portion between the third coating portion and the fourth coating portion,
wherein a third light-irradiated surface having a width larger than a diameter of the third core is provided in a region where a virtual line passing through at least two or more of the third cores among the plurality of third cores or a virtual line passing through the center of the third multicore fiber intersects an outer circumference of the third coating portion, and the third light-irradiated surface includes a curved surface having a radius of curvature of 0.5 mm or more or a flat surface, and
wherein a fourth light-irradiated surface having a width larger than a diameter of the fourth core is provided in a region where a virtual line passing through at least two or more of the fourth cores among the plurality of fourth cores or a virtual line passing through the center of the fourth multicore fiber intersects an outer circumference of the fourth coating portion, and the fourth light-irradiated surface includes a curved surface having a radius of curvature of 0.5 mm or more or a flat surface.

11. The optical fiber ribbon according to claim 10,
wherein a normal direction of the first light-irradiated surface at an intersection of the first light-irradiated surface and the virtual line, a normal direction of the second light-irradiated surface at an intersection of the second light-irradiated surface and the virtual line, a normal direction of the third light-irradiated surface at an intersection of the third light-irradiated surface and the virtual line, and a normal direction of the fourth light-irradiated surface at an intersection of the fourth light-irradiated surface and the virtual line all face the same direction.

12. A method for manufacturing an optical fiber ribbon comprising:
preparing a first multicore fiber including a plurality of first cores and first cladding covering the plurality of first cores;
preparing a second multicore fiber including a plurality of second cores and second cladding covering the plurality of second cores;
covering the first multicore fiber and the second multicore fiber with a resin while arranging the first multicore fiber and the second multicore fiber in parallel; and
irradiating a light-irradiated surface in a coating resin portion covering the first multicore fiber with light, and aligning the plurality of first cores in the first multicore fiber based on a result of the light irradiation,
wherein the light-irradiated surface is a surface provided in a region where a virtual line passing through at least two or more of the first cores among the plurality of first cores or a virtual line passing through the center of the first multicore fiber intersects an outer circumference of the coating resin portion, and the light-irradiated surface includes a width longer than a diameter of the first core and includes a curved surface having a radius of curvature of 0.5 mm or more or a flat surface.
